## Europäisches Patentamt

## European Patent Office

## Office européen des brevets

(11) Veröffentlichungsnummer: **0 294 574**
**A2**

(12) **EUROPÄISCHE PATENTANMELDUNG**

(21) Anmeldenummer: 88106557.7

(51) Int. Cl.⁴: **C11D 3/12**

(22) Anmeldetag: 23.04.88

(30) Priorität: 06.06.87 DE 3719042

(43) Veröffentlichungstag der Anmeldung:
14.12.88 Patentblatt 88/50

(84) Benannte Vertragsstaaten:
AT BE CH DE ES FR GB IT LI NL SE

(71) Anmelder: **Degussa Aktiengesellschaft**
**Weissfrauenstrasse 9**
**D-6000 Frankfurt am Main 1(DE)**

(72) Erfinder: **Diehl, Manfred, Dr.**
**Zeisselstrasse 1**
**D-6000 Frankfurt am Main 1(DE)**
Erfinder: **Bergmann, Roland**
**Rue d'Acheres 5 a**
**D-6451 Grosskrotzenburg(DE)**

(54) **Wässrige stabile Suspension wasserunlöslicher zum Binden von Calciumionen befähigter Silikate und deren Verwendung zur Herstellung von Wasch- und Reinigungsmitteln.**

(57) Wässrige pumpfähige, stabile Suspension eines wasserunlöslichen, zum Binden von Calciumionen befähigten Silikates, welche bezogen auf das Gesamtgewicht der wässrigen Suspension

a) als zum Binden von Calcium befähigtes Silikat 0,5 bis 80 Gewichtsprozent einer feinverteilten, gebundenes Wasser enthaltenden, synthetisch hergestellten, wasserunlöslichen Verbindung der allgemeinen Formel
$(Kat_{2/n}O)_x \cdot Me_2O_3 \cdot (SiO_2)_y$ (I),
in der Kat ein mit Calcium austauschbares Kation der Wertigkeit n, x eine Zahl von 0,7 bis 1,5, Me Bor oder Aluminium und y eine Zahl von 0,8 bis 6 bedeuten und

b) als dispergierend wirkenden Bestandteil 0,5 bis 6 Gewichtsprozent eine Mischung aus mindestens zwei Oxoalkoholethoxylaten der Formel II
$R-(OCH_2CH_2)_n-OH$,
wobei R = $C_{10}$-$C_{15}$ Alkyl mit einem Verzweigungsgrad von maximal 25 %, d. h., daß maximal 25 % des Fettalkoholethoxylates eine einfache Methylverzweigung aufweisen
n = 3 - 5,5 Mol EO bei Komponente 1
n = 5,75 - 7 Mol EO bei Komponente 2
enthält.
Die Suspension kann zur Herstellung pulverförmiger Wasch- und Reinigungsmittel eingesetzt werden.

EP 0 294 574 A2

EP 0 294 574 A2

## Wässrige stabile Suspensionen wasserunlöslicher, zum Binden von Calciumionen befähigter Silikate und deren Verwendung zur Herstellung von Wasch- und Reinigungsmitteln

Es wurden bereits Verfahren zum Waschen und Reinigen von festen Materialien, insbesondere von Textilien, sowie für die Durchführung der Verfahren geeignete Wasch- und Reinigungsmittel vorgeschlagen, bei welchen die Rolle der Calcium komplex bindenden Phosphate ganz oder teilweise von zum Binden von Calcium befähigten, feinverteilten, im allgemeinen gebundenes Wasser enthaltenden, wasserunlöslichen Aluminiumsilikaten übernommen wird (vgl. DE-OS 24 12 837).

Es handelt sich dabei um Verbindungen der allgemeinen Formel I

$$(Kat_{2/n}O)_x . Me_2O_3 . (SiO_2)_y \qquad (I)$$

in der Kat ein mit Calcium austauschbares Kation der Wertigkeit n, x eine Zahl von 0,7 bis 1,5 Me Aluminium und y eine Zahl von 0,8 bis 6, vorzugsweise von 1,3 bis 4, bedeuten.

Als Kation kommt bevorzugt Natrium in Frage, es kann aber auch durch Lithium, Kalium, Ammonium oder Magnesium ersetzt sein.

Die oben definierten, zum Binden von Calcium befähigten Verbindungen werden im folgenden der Einfachheit halber als "Aluminiumsilikate" bezeichnet. Dies gilt insbesondere auch für die bevorzugt zu verwendenden Natriumaluminiumsilikate; alle für deren erfindungsgemäße Verwendung gemachten Angaben und sämtliche Angaben über deren Herstellung und Eigenschaften gelten entsprechend für die Gesamtheit aller oben definierten Verbindungen.

Die für den Einsatz in Wasch- und Reinigungsmitteln besonders geeigneten Aluminiumsilikate besitzen ein Calciumbindevermögen von vorzugsweise 50 bis 200 mg CaO/g des wasserfreien Aluminiumsilikates. Wenn im folgenden auf wasserfreies Aluminiumsilikat Bezug genommen wird, so ist damit der Zustand der Aluminiumsilikate gemeint, der nach einstündigem Trocknen bei 800 °C erreicht wird. Bei dieser Trocknung wird das anhaftende und das gebundene Wasser praktisch völlig entfernt.

Bei der Herstellung von Wasch- oder Reinigungsmitteln, in denen neben üblichen Bestandteilen derartiger Mittel die oben definierten Aluminiumsilikate vorliegen, wird vorteilhaft von Aluminiumsilikaten ausgegangen, die feucht sind, beispielsweise noch von ihrer Herstellung her. Man vermischt dabei die feuchten Verbindungen wenigstens mit einem Teil der übrigen Bestandteile des herzustellenden Mittels und überführt das Gemisch durch bekannte Maßnahmen, wie zum Beispiel Sprühtrocknen in das fertige Wasch- oder Reinigungsmittel als Endprodukt, beispielsweise in ein schüttfähiges Produkt.

Im Rahmen des vorstehend skizzierten Herstellungsverfahrens für Wasch- oder Reinigungsmittel werden die Aluminiumsilikate beispielsweise als wässrige Suspension angeliefert bzw. eingesetzt. Dabei wären gewisse Verbesserungen der Suspensionseigenschaften - z. B. Suspensionsstabilität und der Pumpbarkeit - der in wässriger Phase dispergierten Aluminiumsilikate noch erwünscht.

Es ist bekannt zur Bildung von Aluminiumsilikatsuspensionen Alkylphenoläthylenaddukte zu verwenden. Zum Beispiel werden Addukte mit 6 bis 7 Mol Äthylenoxid verwendet (DE-OS 26 15 698).

Aufgrund des steigenden ökologischen Bewußtseins wird zunehmendes Augenmerk auf die biologische Abbaubarkeit gelegt. Neben dem Primärabbau, dem Verlust der grenzflächenaktiven Eigenschaften, steht immer mehr auch der Sekundärabbau, die Mineralisierung, im Vordergrund.

Sowohl der primäre als auch insbesondere der sekundäre Abbau sind von der Linearität der Kohlenstoffkette abhängig, das heißt, daß der Abbau in der Regel um so schlechter ist, je verzweigter die Kohlenstoffkette ist.

Die in DE-OS 32 09 631 eingesetzten Nonylphenolethoxylate gelten aufgrund ihres Benzolringes und ihres verzweigten Nonyl-Rests als schlecht abbaubar, wobei insbesondere die Gefahr besteht, daß toxisches Nonylphenol als metastabiles Abbauprodukt entsteht. Auf die Verwendung von Nonylphenolethoxylaten wurde aus diesem Grund von der deutschen Waschmittelindustrie verzichtet. In der Schweiz soll die Verwendung verboten werden.

Bei den in DE-OS 34 44 311 verwendeten iso-Tridecylalkoholethoxylaten handelt es sich, wie der Name schon sagt, um verzweigt-kettige Oxoalkohole mit einem Verzweigungsgrad von mindestens 50 %. Dabei handelt es sich um unüberschaubare Isomerengemische, oft mit allen möglichen Verzweigungen wie Methyl, Äthyl, Propyl, iso-Propyl u. a.

Es bestand somit das Vorurteil, daß sich bevorzugt nur solche verzweigten Tenside zur Zeolith-A-Slurry-Stabilisierung eignen.

Es wurde nun gefunden, daß bestimmte Mischungen von weitgehend linearen Oxoalkoholethoxylaten in ganz besonderem Maße die Fähigkeit besitzen, Suspensionen der obigen Calcium bindenden Aluminiumsilikate derart zu stabilisieren, daß diese selbst bei hohem Feststoffgehalt lange Zeit stabil und auch nach langem Stehen noch einwandfrei pumpbar sind. Überraschenderweise hat sich gezeigt, daß diese bestimm-

2

ten Mischungen in der Lage sind, sogar feuchte Aluminiumsilikate, die einen Wassergehalt von 70 % und weniger aufweisen, über längere Zeit ohne Rühren sedimentationsstabil zu halten.

Gegenstand der Erfindung ist eine wässrige, pumpfähige, stabile Suspension eines wasserunlöslichen, zum Binden von Calciumionen befähigten Silikates, welches dadurch gekennzeichnet ist, daß sie bezogen auf das Gesamtgewicht der wässrigen Suspension

a) als zum Binden von Calcium befähigtes Silikat 0,5 bis 80 Gewichtsprozent einer feinverteilten, gebundenes Wasser enthaltenden, synthetisch hergestellten, wasserunlöslichen Verbindung der allgemeinen Formel

$$(Kat_{2/n}O)_x . Me_2O_3 . (SiO_2)_y \qquad (I),$$

in der Kat ein mit Calcium austauschbares Kation der Wertigkeit n, x eine Zahl von 0,7 bis 1,5 Me Bor oder Aluminium und y eine Zahl von 0,8 bis 6 bedeuten, und

b) als dispergierend wirkenden Bestandteil 0,5 bis 6 Gewichtsprozent, vorzugsweise 1 bis 2 Gew.-%, insbesondere 1,4 bis 1,6 Gew.-% eine Mischung aus mindestens zwei Oxoalkoholethoxylaten der Formel II

$$R-(OCH_2CH_2)_n-OH,$$

wobei R = $C_{10}$-$C_{15}$ Alkyl mit einem Verzweigungsgrad von maximal 25 %, d. h., daß maximal 25 % des Fettalkoholethoxylates eine einfache Methylverzweigung aufweisen

n = 3 - 5,5 Mol EO bei Komponente 1

n = 5,75 - 7 Mol EO bei Komponente 2

enthält.

In der erfindungsgemäßen Suspension kann die Komponente A kristallin sein.

In der Formel I der Komponente A kann y eine Zahl von 1,3 bis 4 bedeuten.

Die kristalline Komponente A kann in einer bevorzugten Ausführung ein Zeolith des Typs A sein.

Die vorstehend genannten Verbindungen sind die wesentlichen Bestandteile der erfindungsgemäßen Suspension. Es können jedoch auch weitere Bestandteile enthalten sein, so z. B. schaumdämpfende Zusätze bzw. sogenannte Lösungsvermittler, d. h., Verbindungen, die die Löslichkeit der zugesetzten Dispergiermittel in der wässrigen Phase verbessern. Als Schaumdämpfer können die üblichen - schaumdämpfenden Substanzen, beispielsweise schaumdämpfende Seife, Silikonentschäumer, - schaumdämpfende Triazinderivate, die sämtlich der Fachwelt bekannt und geläufig sind, eingesetzt werden. Ein derartiger Zusatz ist im allgemeinen nicht erforderlich; bei schäumenden Dispergiermitteln kann er jedoch - insbesondere bei höheren Alkylbenzolsulfonsäure-Einsatzmengen - erwünscht sein.

Auch ein Zusatz von lösungsvermittelnden Substanzen ist im allgemeinen nicht erforderlich, kann jedoch angezeigt sein, wenn die erfindungsgemäße Suspension als stabilisierendes Mittel ein hydrophiles, aber wenig in Wasser lösliches Kolloid wie beispielsweise Polyvinylalkohol enthält. Vorteilhaft wird z. B. ein Lösungsvermittler - sehr geeignet sind Natriumtoluolsulfonat oder Polyglykoläther - eingesetzt.

Der Anteil des Lösungsvermittlers an der Gesamtsuspension kann beispielsweise in der gleichen Größenordnung wie der Anteil des Stabilisierungsmittels liegen. Weitere als Lösungsvermittler geeignete Verbindungen sind der Fachwelt allgemein bekannt; hydrotrophe Mittel wie beispielsweise Benzolsulfonsäure, Xylolsulfonsäure bzw. deren wasserlösliche Salze oder auch Octylsulfat sind geeignet.

Bei sämtlichen Angaben zur "Konzentration der Aluminiumsilikate" zum "Feststoffgehalt" oder zum Gehalt an "Aktivsubstanz" (= AS) wird auf den Zustand der Aluminiumsilikate Bezug genommen, der nach einstündigem Trocknen bei 800 °C erreicht wird. Bei dieser Trocknung wird das anhaftende und das gebundene Wasser praktisch völlig entfernt.

Bei den einzusetzenden Aluminiumsilikaten der Komponente A kann es sich um amorphe oder um kristalline Produkte handeln, wobei selbstverständlich auch Mischungen von amorphen und kristallinen Produkten und auch teilkristalline Produkte einsetzbar sind. Die Aluminiumsilikate können natürlich vorkommende oder aber synthetisch hergestellte Produkte sein, wobei die synthetisch hergestellten Produkte bevorzugt sind. Die Herstellung kann z. B. durch Reaktion von wasserlöslichen Silikaten mit wasserlöslichen Aluminaten in Gegenwart von Wasser erfolgen. Zu diesem Zweck können wässrige Lösungen der Ausgansmaterialien miteinander vermischt oder eine in festem Zustand vorliegende Komponente mit der anderen, als wässrige Lösung vorliegenden Komponente umgesetzt werden. Auch durch Vermischen beider, in festem Zustand vorliegender Komponente" erhält man bei Anwesenheit von Wasser die gewünschten Aluminiumsilikate. Auch aus $Al(OH)_2$, $Al_2O_3$ oder $SiO_2$ lassen sich durch Umsetzen mit Alkalisilikat- bzw. aluminatlösungen Aluminiumsilikate herstellen. Die Herstellung kann auch nach weiteren bekannten Verfahren erfolgen. Insbesondere bezieht sich die Erfindung auf Aluminiumsilikate, die eine dreidimensionale Raumgitterstruktur aufweisen.

Das bevorzugte, etwa im Bereich von 100 bis 200 mg CaO/g AS meist bei etwa 100 bis 180 mg CaO/g AS liegende Calciumbindevermögen findet sich vor allem bei Verbindungen der Zusammensetzung:

$$0,7 - 1,1 \ Na_2O . Al_2O_3 . 1,3 - 3,3 \ SiO_2$$

3

Diese Summenformel umfaßt zwei Typen verschiedener Kristallstrukturen (bzw. deren nicht kristalline Vorprodukte), die sich auch durch ihre Summenformeln unterscheiden. Es sind dies:

a) 0,7 - 1,1 $Na_2O$ . $Al_2O_3$ . 1,3 - 2,4 $SiO_2$

b) 0,7 - 1,1 $Na_2O$ . $Al_2O_3$ . 2,4 - 3,3 $SiO_2$

Die unterschiedlichen Kristallstrukturen zeigen sich im Röntgenbeugungsdiagramm.

Das in wässriger Suspension vorliegende amorphe oder kristalline Aluminiumsilikat läßt sich durch Filtration von der verbleibenden wässrigen Lösung abtrennen und bei Temperaturen von z. B. 50 bis 400 °C trocknen. Je nach den Trocknungsbedingungen enthält das Produkt mehr oder weniger gebundenes Wasser.

Derart hohe Trocknungstemperaturen sind im allgemeinen nicht zu empfehlen; zweckmäßigerweise geht man nicht über 200 °C hinaus, wenn das Aluminiumsilikat für den Einsatz in Wasch- und Reinigungsmitteln vorgesehen ist. Die Aluminiumsilikate brauchen jedoch nach ihrer Herstellung zur Bereitung einer erfindungsgemäßen Suspension überhaupt nicht getrocknet zu werden; vielmehr kann - und dies ist besonders vorteilhaft - ein von der Herstellung noch feuchtes Aluminiumsilikat verwendet werden. Es lassen sich jedoch auch bei mittleren Temperaturen, beispielsweise bei 80 bis 200 °C, bis zur Entfernung des anhaftenden flüssigen Wassers getrocknete Aluminiumsilikate zur Bereitung erfindungsgemäßer Suspensionen verwenden.

Die Teilchengröße der einzelnen Aluminiumsilikatpartikel kann verschieden sein und z. B. im Bereich zwischen 0,1 µ und 0,1 mm liegen. Mit besonderem Vorteil verwendet man Aluminiumsilikate, die zu wenigstens 80 Gew.-% aus Teilchen einer Größe von 10 bis 0,01 µ, insbesondere von 8 bis 0,1 µ bestehen.

Vorzugsweise einthalten diese Aluminiumsilikate keine Primär- bzw. Sekundärteilchen mehr mit Durchmessern oberhalb von 45 µ. Als Sekundärteilchen werden Teilchen, die durch Aggregation der Primärteilchen zu größeren Gebilden entstanden sind, bezeichnet.

Im Hinblick auf die Agglomeration der Primärteilchen zu größeren Gebilden hat sich die Verwendung der von ihrer Herstellung noch feuchten Aluminiumsilikate zur Herstellung der erfindungsgemäßen Suspensionen besonders bewährt, da sich herausgestellt hat, daß bei Verwendung dieser noch feuchten Produkte eine Bildung von Agglomeraten praktisch vollständig unterbunden wird.

In einer besonders bevorzugten Ausführungsvorm der Erfindung wird als Komponente A pulverförmiger Zeolith des Typs A mit besonders definiertem Teilchespektrum eingesetzt.

Derartige Zeolithpulver können gemäß DE-AS 24 47 021, DE-AS 25 17 218, DE-OS 26 52 419, DE-OS 26 51 420, DE-OS 26 51 436, DE-OS 26 51 437, DE-OS 26 51 445, DE-OS 26 51 485 hergestellt werden. Sie weisen dann die dort angegebenen Teilchenverteilungskurven auf.

In einer besonders bevorzugten Ausführungsform kann ein pulverförmiger Zeolith des Typs A verwendet werden, der die in der DE-OS 26 51 485 beschriebene Teilchengrößenverteilung aufweist.

Die Konzentration an Komponente A kann bevorzugt 44 bis 55 Gew.-%, insbesondere 46 bis 52 Gewichtsprozent und mehr betragen.

Die Komponente B kann bevorzugterweise aus einer Mischung von zwei Oxoalkoholethoxylaten bestehen, wobei die eine Komponente ein Oxoalkoholethoxylat mit 3 bis 5,5 Mol Ethylenoxid und dem Trübungspunkt 56 - 71 °C bevorzugt mit 4 - 5 Mol EO und dem Trübungspunkt 62 - 67 °C, wobei die Kohlenstoffkette R 10 - 15 bevorzugt 12 - 13 C-Atomen aufweist und die zweite Komponente (B) ein Oxoalkoholethoxylat mit 5,75 bis 7 Mol Ethylenoxid und dem Trübungspunkt 72 bis 80 °C, bevorzugt mit 5,5 - 6,5 Mol EO und dem Trübungspunkt 72 - 77 °C, wobei die Kohlenstoffkette R 10 - 15, bevorzugt 12 - 15 C-Atome aufweist.

Die Oxoalkoholethoxylate können in einem Verhältnis von 9 : 1 bis 1 : 9, vorzugsweise 2 : 3 bis 3 : 2, insbesondere 0,9 : 1,1 bis 1,1 : 0,9 miteinander vermischt sein.

Die Konzentration dieser Mischung in der wässrigen Suspension kann vorzugsweise von 1 bis 2 Gew.-%, insbesondere 1,4 bis 1,6 Gew.-% betragen. Diese Konzentration ist ausreichend, eine Suspension mit einem Feststoffgehalt von 50 Gew.-% und mehr zu stabilisieren.

Die erfindungsgemäße Suspension weist den Vorteil auf, daß sie in dem Temperaturbereich von 10 bis 50 °C sedimentationsstabil ist und eine pumpfähige Konsistenz aufweist.

Von weiterem Vorteil ist, daß das Oxoalkoholethoxylat bei Raumtemperatur flüssig ist und daher nicht aufgeheizt werden braucht.

Von besonderem Vorteil ist, daß in der erfindungsgemäßen Suspension deutlich höhere Feststoffgehalte von 50 Gew.-% und mehr erreicht werden können.

Die bekannte Suspension gemäß DE-OS 26 15 698 weist eine geringere Sedimentationsstabilität auf und ist bei gleicher Einarbeitungsart bei Raumtemperatur nicht homogen und deshalb schlechter verarbeitbar.

Grundsätzlich können die wässrigen Suspensionen außer den genannten Bestandteilen A und B und außer gegebenenfalls von Ausgangsmaterialien für die Herstellung dieser Bestandteile in vergleichsweise geringen Mengen enthalten. Ist eine Weiterverarbeitung der Suspension zu Wasch- und Reinigungsmitteln vorgesehen, so handelt es sich bei den zusätzlich vorliegenden Stoffen natürlich zweckmäßigerweise um Stoffe, die als Bestandteile von Wasch- und Reinigungsmitteln geeignet sind.

Einen Anhaltspunkt über die Stabilität der Suspension gibt ein einfacher Test, bei welchem eine Aluminiumsilikatsuspension der gewünschten Konzentration - z. B. 31 %ig - hergestellt wird, die ein erfindungsgemäßes Dispergiermittel und gegebenenfalls weitere Stoffe, beispielsweise Waschmittelbestandteile wie Pentanatriumtriphosphat, in verschiedenen Mengen enthält. Der Einfluß des zugesetzten Stoffes kann dann im Absetzverhalten der Suspension visuell beobachtet werden. Nach 72stündigem Stehen soll eine bevorzugte Suspension im allgemeinen höchstens so weit abgesetzt sein, daß die überstehende klare bzw. von Silikatteilchen freie Lösung nicht mehr als 20 %, vorzugsweise nicht mehr als 10 %, insbesondere nicht mehr als 6 % der Gesamthöhe ausmacht.

Im allgemeinen soll die Menge der Zusatzstoffe so gehalten werden, daß die Suspension nach 24stündigem, vorzugsweise nach 48stündigem und insbesondere auch nach 72stündigem Stehen in Vorratsbehälter und Rohr- bzw. Schlauchleitungen noch einwandfrei wieder umgepumpt werden kann. Das Absetzverhalten der gegebenenfalls noch weitere Bestandteile enthaltenden Suspension wird bei Raumtemperatur geprüft. Sie sind auch nach 4 bzw. 8 Tagen einwandfrei pumpfähig. Auch diese Angaben zur Suspensionsstabilität geben nur Anhaltspunkte; es hängt vom jeweiligen Einzelfall ab, welche Suspensionsstabilität einzustellen ist. Bei Verwendung der erfindungsgemäßen Suspension als Stammsuspension zur längeren Lagerung in einem Reservoir, aus welchem sie nach Bedarf durch Pumpen abgezogen werden kann, kann es zweckmäßig sein, den Anteil sonstiger Bestandteile beispielsweise von Wasch- und Reinigungsmitteln gering zu halten oder auf diese ganz zu verzichten.

Die Suspensionen können durch einfaches Vermischen ihrer Bestandteile hergestellt werden, wobei die Aluminiumsilikate z. B. als solche oder - gegebenenfalls von der Herstellung her - bereits feucht bzw. in wässriger Suspension befindlich eingesetzt werden könnnen. Besonders vorteilhaft ist es, die Komponente B in die von ihrer Herstellung her noch feuchten Aluminiumsilikate z. B. als Filterkuchen einzurühren.

Es können aber selbstverständlich auch bereits getrocknete, d. h. von anhaftemdem Wasser befreite, gegebenenfalls noch gebundenes Wasser aufweisende Aluminiumsilikate eingesetzt werden.

Die erfindungsgemäßen Suspensionen zeichnen sich durch hohe Stabilität und durch weitere Vorteile aus. Ihre stabilisierende Wirkung ist insbesondere bei Aluminiumsilikaten mit Teilchengrößen von 5 bis 30 μ besonders wertvoll. Sie sind pumpbar, so daß sie eine einfache Handhabung feuchter Aluminiumsilikate ermöglichen. Selbst nach längeren Unterbrechungen im Pumpvorgang sind die Suspensionen einwandfrei umpumpbar. Aufgrund ihrer hohen Stabilität sind die Suspensionen auch in üblichen Tank- und Kesselwagen transportierbar, ohne daß dabei eine Bildung unbrauchbarer bzw. störender Rückstände zu befürchten ist. Damit sind die Suspensionen hervorragend als eine Lieferform von Aluminiumsilikaten für die Lieferung an beispielsweise Waschmittelhersteller geeignet.

Die Suspensionen lassen sich bei Raumtemperatur oder auch bei höheren Temperaturen aufbewahren, durch Rohrleitungen pumpen oder auf andere Weise transportieren. Meist erfolgt die Handhabung der Suspensionen bei Temperaturen zwischen Raumtemperatur - meist bevorzugt - und etwa 50 °C.

Besonders geeignet sind die erfindungsgemäßen Suspensionen für die Weiterverarbeitung zu trocken erscheinenden, schütt- bzw. rieselfähigen Produkten, also beispielsweise zur Herstellung von pulverförmigen Aluminiumsilikaten. Es treten keine lästigen Rückstände bei der Zufuhr der wäßrigen Suspensionen zur Trocknungsapparatur auf. Ferner hat sich gezeigt, daß die Suspensionen der Erfindung eine Verarbeitung zu außerordentlich staubfreien Produkten ermöglichen.

Aufgrund ihrer besonderen Stabilität sind die erfindungsgemäßen Suspensionen bereits als solche, d. h. ohne weitere Verarbeitung mit oder ohne weitere waschend, bleichend und/oder reinigend wirkende Zusätze, beispielsweise als Wasserenthärtungsmittel, Wasch- oder Reinigungsmittel und insbesondere als milde flüssige Scheuermittel mit erhöhter Suspensionsstabilität verwendbar.

Eine besonders wichtige Verwendung der Suspension ist die Weiterverarbeitung zu trocken erscheinenden, schütt- bzw. rieselfähigen Wasch- und Reinigungsmitteln, die neben den Suspensionsbestandteilen weitere Verbindungen enthalten.

Die erfindungsgemäßen Suspensionen sind insbesondere zur Herstellung von pulverförmigen Wasch- und Reinigungsmitteln geeignet.

Zur Herstellung dieser Mittel geht man von einer wäßrigen, fließfähigen Vormischung der einzelnen Bestandteile der Mittel aus und führt diese auf übliche Weise in ein schüttfähiges Produkt über. Dabei werden die oben definierten Aluminiumsilikate in From der erfindungsgemäßen Suspension eingesetzt. Die erfindungsgemäßen Suspensionen können nach beliebigen bekannten Verfahren zu den festen, -

schüttfähigen Wasch- und Reinigungsmitteln verarbeitet werden.

Insbesondere geht man bei der Herstellung von pulverförmigen, rieselfähigen Wasch- und Reinigungsmitteln so vor, daß man eine erfindungsgemäße Suspension - beispielsweise aus einem Vorratsbehälter - mit wenigstens einem waschend, bleichend oder reinigend wirkenden Bestandteil des herzustellenden Mittels vermischt und das Gemisch anschließend nach einem beliebigen Verfahren in das pulverförmige Produkt überführt. Vorteilhaft wird ein Komplexbildner zugesetzt, d. h. eine Verbindung, die die für die Wasserhärte verantwortlichen Erdalkalimetallionen, insbesondere Magnesium- und Calciumionen komplex zu binden vermag.

Im allgemeinen wird bei der Herstellung von Wasch- und Reinigungsmitteln die erfindungsgemäße Suspension vorzugsweise mit wenigstens einem nicht zu den möglichen Bestandteilen der Komponente B gehörenden wasserlöslichen Tensid vereinigt.

Bei der Herstellung von Wasch- und Reinigungsmitteln gibt es verschiedene Varianten.

Beispielsweise können die erfindungsgemäßen Suspensionen mit zur Bindung von Kristallwasser befähigten Substanzen vereinigt werden, zweckmäßigerweise durch Aufspühren der Suspension auf die in einem Mischer vorgelegten, zur Bindung von Kristallwasser befähigten Verbindungen, so daß bei ständigem Durchmischen ein schließlich festes, trocken erscheinendes Produkt erhalten wird. Vorzugsweise werden die erfindungsgemäßen Suspensionen jedoch, als "Slurry" vermischt, mit wenigstens einer weiteren waschend, bleichend oder reinigend wirkenden Verbindung der Zerstäubungstrocknung unterworfen. Hierbei zeigen sich weitere überraschende Vorteile der beanspruchten Aluminiumsilikat-Suspension. Es hat sich nämlich gezeigt, daß bei Einsatz erfindungsgemäßer Suspensionen bei der Zerstäubungstrocknung sehr staubarme Produkte erhalten werden können. Die durch Zerstäubungstrocknung erhaltenen Produkte weisen ein hohes Calciumbindevermögen auf und sind gut benetzbar.

Waschmittel, die unter Verwendung der oben beschriebenen Suspension hergestellt worden sind, können auf verschiedenste Weise zusammengesetzt sein. Im allgemeinen enthalten sie wenigstens ein nicht zu den erfindungsgemäß eingesetzten Dispergiermitteln, die in den beanspruchten Aluminiumsilikat-Suspensionen vorliegen, gehörendes wasserlösliches Tensid. Allgemein enthalten sie neben wenigstens einer weiteren Verbindung, die waschend, bleichend oder reinigend wirkt und anorganisch oder organisch ist, als Calcium bindende Verbindung ein wie oben definiertes Aluminiumsilikat. Darüber hinaus können in derartigen Mitteln sonstige übliche, meist in geringeren Mengen anwesende Hilfs- und Zusatzstoffe vorhanden sein.


Beispiele

Es wird ein Zeolit-A-Filterkuchen und Stabilisator verrührt, gegebenenfalls unter Zusatz von Wasser.

Als Stabilisator werden Verbindungen entsprechend der Formel II verwendet. Angegeben wird der Ethoxylierungsgrad EO. Der eingesetzte Zeolith-A-Filterkuchen wird gemäß DE-OS 26 51 485 hergestellt und weist das dort angegebene Teilchenspektrum auf.

Für die Durchführung der Beispiele werden 50 kg unstabilisierter Zeolithsuspension mit einem Ekato-Standardmix-Rührer, ausgerüstet mit einer Flügelscheibe, eine Stunde bei 500 $\mu$/min, gegebenenfalls unter Zusatz von Wasser, aufgerührt.

Nach Zugabe von 1,5 Gew.-% Stabilisatorgemisch wird 10 Minuten bei gleicher Geschwindigkeit weitergerührt.

Die Auswertung erfolgt, wie die Tabelle I veranschaulicht, nach 3 Tagen.

Die Trübungspunkte der eingesetzten Stabilisatoren sind in der Tabelle I beschrieben.

Tabelle I

Trübungspunkte nach DIN 53 917 der verwendeten
Fettalkoholethoxylate
(5 g Tensid in 25 g       25 %iger Butyldiglykollösung)

| | | |
|---|---|---|
| $C_{13}$ Oxoalkohol - | 4,5 EO | 66 °C |
| " | 5,0 EO | 69 °C |
| " | 5,5 EO | 69 °C |
| " | 6,0 EO | 72 °C |
| " | 6,5 EO | 76 °C |
| " | 7,0 EO | 79 °C |
| $C_{12/13}$ Oxoalkohol - | 4,0 EO | 62 °C |
| " | 4,5 EO | 65 °C |
| " | 4,75 EO | 66 °C |
| " | 5,0 EO | 68 °C |
| " | 5,5 EO | 71 °C |
| " | 6,0 EO | 74 °C |
| " | 6,5 EO | 76 °C |
| " | 7,0 EO | 78 °C |
| $C_{14/15}$ Oxoalkohol | 5 EO | 65 °C |
| " | 7 EO | 79 °C |
| " | 11 EO | 86 °C |
| $C_{12-15}$ Oxoalkohol | 8 EO | 60 °C |

. . .

In den nachfolgenden Tabellen II bis VIII werden die Oxoalkohole mit den Kohlenstoffketten $C_{12}/C_{13}$ als Oxoalkohole 23 bezeichnet.

Entsprechend ist ein Oxoalkohol mit $C_{14}/C_{15}$ ein Oxoalkohol 45 bzw. ein Oxoalkohol mit $C_{12/15}$ ein Oxoalkohol 25.

Oxoalkohol 23 - 4,5/5,5 bezeichnet eine 1 : 1-Mischung des Oxoalkoholes $C_{12}/C_{13}$ mit 4,5 Mol EO mit einem Oxoalkohol $C_{12}/C_{13}$ mit 5,5 Mol EO.

Die Zeolith-A-Konzentration beträgt bei allen Beispielen 50 %.

Tabelle II  Stabilisierung von Wessalith S mit Oxoalkoholethoxylaten mit R
= Alkyl mit $C_{12}$-$C_{15}$ Kettenlänge

| | 1 | 2 | 3 | 4 | 5 |
|---|---|---|---|---|---|
| | Oxoalkohol 23-4,5/5,5 | Oxoalkohol 23-4,5/6,0 | Oxoalkohol 23-4,75/6,0 | Oxoalkohol 23-4/23-6,5 | Oxoalkohol 23-5/45-7 |
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | -/2 | -/- | -/1 | -/- | 1/1 |
| Homogenität | 1/2 | 1/1 | 1/2 | 1/1 | 1/5 |
| Fließverhalten | 1/2 | 1/1 | 1/2 | 1/1 | 1/5 |
| Bodensatz (mm) | -/- | -/- | -/- | -/- | -/- |
| Bemerkung | - | - | - | viskos | - |

Die Bewertung von Homogenität und Fließverhalten erfolgt nach dem Schulnotensystem
(1 = sehr gut bis 5 = mangelhaft)

## Tabelle III Stabilisierung von Wessalith S mit Oxoalkoholethoxylaten mit R = Alkyl mit $C_{12}-C_{15}$ Kettenlänge

|  | 6<br>Oxoalkohol<br>25-5/45-7 | 7<br>Oxoalkohol<br>45-5/45-7 | 8<br>Oxoalkohol<br>25-5/23-6,5 | 9<br>Oxoalkohol<br>23-5,0 | 10<br>Oxoalkchol<br>23-5,5 |
|---|---|---|---|---|---|
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | 1/5 | 1/5 | 1/2 | -/- | -/- |
| Homogenität | 1/5 | 2/5 | 1/5 | 2/2 | 2/2 |
| Fließverhalten | 1/5 | 1/5 | 1/5 | 4/4 | 4/4 |
| Bodensatz (mm) | -/- | -/- | -/- | -/- | -/- |
| Bemerkung | - | - | - | viskos | viskos |

Die Bewertung von Homogenität und Fließverhalten erfolgt nach dem Schulnotensystem (1 = sehr gut bis 5 = mangelhaft)

EP 0 294 574 A2

Tabelle IV     Stabilisierung von Wessalith S mit Oxoalkoholethoxylaten mit R = Alkyl mit $C_{12}-C_{15}$ Kettenlänge

| | 11<br>Oxoalkohol<br>23-6,0 | 12<br>Oxoalkohol<br>23-6,5 | 13<br>Oxoalkohol<br>23-7,0 | 14<br>Oxoalkohol<br>23-5,5/6,0 | 15<br>Oxoalkohol<br>23-5,5/7,0 |
|---|---|---|---|---|---|
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | -/- | -/- | -/- | -/- | -/- |
| Homogenität | 2/2 | 2/2 | 2/2 | 3/2 | 3/2 |
| Fließverhalten | 4/4 | 4/4 | 4/4 | 4/4 | 4/4 |
| Bodensatz (mm) | -/- | -/- | -/- | -/- | -/- |
| Bemerkung | viskos | viskos | viskos | viskos | viskos |

Die Bewertung von Homogenität und Fließverhalten erfolgt nach dem Schulnotensystem
(1 = sehr gut bis 5 = mangelhaft)

EP 0 294 574 A2

Tabelle V Stabilisierung von Wessalith S mit Oxoalkoholethoxylaten mit R = Alkyl mit $C_{12}$-$C_{15}$ Kettenlänge

|  | 16 Oxoalkohol 23-5,0/6,5 | 17 Oxoalkohol 23-5,0/7,0 | 18 Oxoalkohol 23-4,5/7 | 19 Oxoalkohol $C_{13}$-4,5 | 20 Oxoalkohol $C_{13}$-5,0 |
|---|---|---|---|---|---|
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | -/- | -/- | 1/- | -/- | -/- |
| Homogenität | 2/2 | 3/3 | 2/1 | 2/2 | 2/2 |
| Fließverhalten | 4/4 | 4/4 | 5/1 | 4/4 | 4/4 |
| Bodensatz (mm) | -/- | -/- | -/- | -/- | -/- |
| Bemerkung | viskos | viskos | – | viskos | viskos |

Die Bewertung von Homogenität und Fließverhalten erfolgt nach dem Schulnotensystem (1 = sehr gut bis 5 = mangelhaft)

EP 0 294 574 A2

Tabelle VI    Stabilisierung von Wessalith S mit Oxoalkoholethoxylaten mit R
= Alkyl mit $C_{12}-C_{15}$ Kettenlänge

|  | 21 Oxoalkohol $C_{13}-5,5$ | 22 Oxoalkohol $C_{13}-6,0$ | 23 Oxoalkohol $C_{13}-6,5$ | 24 Oxoalkohol $C_{13}-7,0$ | 25 Oxoalkohol $C_{13}-4,5/7,0$ |
|---|---|---|---|---|---|
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | -/- | 2/3 | 5/5 | 5/5 | 1/1 |
| Homogenität | 2/2 | 5/5 | 5/5 | 5/5 | 5/2 |
| Fließverhalten | 4/4 | 5/5 | 5/5 | 5/5 | 5/2 |
| Bodensatz (mm) | -/- | -/- | -/- | -/- | -/- |
| Bemerkung | viskos | viskos | viskos | viskos | viskos |

Die Bewertung von Homogenität und Fließverhalten erfolgt nach dem Schulnotensystem
(1 = sehr gut bis 5 = mangelhaft)

EP 0 294 574 A2

Tabelle VII    Stabilisierung von Wessalith S mit Oxoalkoholethoxylaten mit R = Alkyl mit $C_{12}$-$C_{15}$ Kettenlänge

|  | 26 | 27 | 28 | 29 | 30 |
|---|---|---|---|---|---|
|  | Oxoalkohol $C_{13}$-5,0/7,0 | Oxoalkohol $C_{13}$-4,5/6,0 | Oxoalkohol $C_{13}$-4,5/6,5 | Oxoalkohol $C_{13}$-5,0/6,5 | Oxoalkohol $C_{13}$-5,0/7,0 |
| Standzeit (Tage) | 3/3 | 3/3 | 3/3 | 3/3 | 3/3 |
| Temperatur (°C) | 22/45 | 22/45 | 22/45 | 22/45 | 22/45 |
| Klare Phase (mm) | -/- | -/1 | -/- | -/- | 3/- |
| Homogenität | 3/3 | 2/2 | 2/2 | 4/3 | 5/5 |
| Fließverhalten | 4/4 | 4/2 | 4/4 | 4/4 | 5/5 |
| Bodensatz (mm) | -/- | -/- | -/- | -/- | -/- |
| Bemerkung | viskos | viskos | viskos | viskos | viskos |

Die Bewertung von Homogenität und Fließverhalten erfolgt nach dem Schulnotensystem (1 = sehr gut bis 5 = mangelhaft)

EP 0 294 574 A2

**Tabelle VIII** Stabilisierung von Wessalith S mit Oxoalkoholethoxylaten mit R = Alkyl mit $C_{12}$-$C_{15}$ Kettenlänge

| | 31 Oxoalkohol $C_{13}$-5,5/6,5 | 32 Oxoalkohol $C_{13}$-5,5/7,0 | 33 Oxoalkohol $C_{13}$-6,0/7,0 |
|---|---|---|---|
| Standzeit (Tage) | 3/3 | 3/3 | 3/3 |
| Temperatur (°C) | 22/45 | 22/45 | 22/45 |
| Klare Phase (mm) | 3/5 | 3/2 | 5/3 |
| Homogenität | 5/5 | 5/5 | 5/5 |
| Fließverhalten | 5/5 | 5/5 | 5/5 |
| Bodensatz (mm) | -/- | -/- | -/- |
| Bemerkung | - | - | - |

Die Bewertung von Homogenität und Fließverhalten erfolgt nach dem Schulnotensystem (1 = sehr gut bis 5 = mangelhaft)

Wenig verzweigte Tridecylalkoholethoxylate, die im Verzweigungsgrad den erfindungsgemäß eingesetzten Oxoalkoholethoxylaten entsprechen, sind nicht zur Slurry-Stabilisierung geeignet, wie die Beispie 9 - 33 belegen.

Aus diesem Grund war es überraschend, daß eine Kombination aus eben diesen wenig verzweigten Produkten, wie die erfindungsgemäß eingesetzten, einen Zeolith A-Slurry hervorragend stabilisieren kann.

Die erfindungsgemäß eingesetzten Oxoalkoholethoxylaten sind zu 80 % linear und weisen bei den restlichen 20 % nur eine Methyl-Verzweigung auf. Sie besitzen aus diesem Grund eine sehr gute biologische Abbaubarkeit.

**Ansprüche**

1. Wässrige pumpfähige, stabile Suspension eines wasserunlöslichen, zum Binden von Calciumionen befähigten Silikates, dadurch gekennzeichnet, daß sie, bezogen auf das Gesamtgewicht der wässrigen Suspension

A) als zum Binden von Calcium befähigtes Silikat 0,5 bis 80 Gewichtsprozent einer feinverteilten, gebundenes Wasser enthaltenden, synthetisch hergestellten, wasserunlöslichen Verbindung der allgemeinen Formel

$(Kat_{2/n}O)_x \cdot Me_2O_3 \cdot (SiO_2)_y$ (I),

in der Kat ein mit Calcium austauschbares Kation der Wertigkeit n, x eine Zahl von 0,7 bis 1,5 Me Bor oder Aluminium und y eine Zahl von 0,8 bis 6 bedeuten und

B) als dispergierend wirkenden Bestandteil 0,5 bis 6 Gewichtsprozent eine Mischung aus mindestens zwei Oxoalkoholethoxylaten der Formel II

$R-(OCH_2CH_2)_n-OH$,

wobei R = $C_{10}-C_{15}$ Alkyl mit einem Verzweigungsgrad von maximal 25 %, d. h., daß maximal 25 % des Fettalkoholethoxylates eine einfache Methylverzweigung aufweisen

n = 3 - 5,5 Mol EO bei Komponente 1

n = 5,75 - 7 Mol EO bei Komponente 2

enthält.

2. Suspension nach Anspruch 1, dadurch gekennzeichnet, daß die Komponente A kristallin ist.

3. Suspension nach den Ansprüchen 1 oder 2, dadurch gekennzeichnet, daß in der Formel I der Komponente A y eine Zahl von 1,3 bis 4 bedeutet.

4. Suspension nach den Ansprüchen 1 bis 3, dadurch gekennzeichnet, daß die Komponente A ein Zeolith A ist.

5. Suspension nach den Ansprüchen 1 bis 4, dadurch gekennzeichnet, daß die Komponente B aus einer Mischung von zwei Oxoalkoholethoxylaten besteht, wobei die eine Komponente ein Oxoalkoholethoxylat mit 3 bis 5,5 Mol Ethylenoxid und dem Trübungspunkt 56 - 71 °C bevorzugt mit 4 - 5 Mol EO und dem Trübungspunkt 62 - 67 °C, wobei die Kohlenstoffkette R 10 - 15 bevorzugt 12 - 13 C-Atome aufweist und die zweite Komponente (B) ein Oxoalkoholethoxylat mit 5,75 bis 7 Mol Ethylenoxid und dem Trübungspunkt 72 bis 80 °C, bevorzugt mit 5,5 - 6,5 Mol EO und dem Trübungspunkt 72 - 77 °C, wobei die Kohlenstoffkette R 10 - 15, bevorzugt 12 - 15 C-Atome aufweist.

6. Suspension nach Anspruch 5, dadurch gekennzeichnet, daß das Mischungsverhältnis der beiden $C_{12}-C_{15}$ -Oxoalkoholethoxylate 9 zu 1 bis 1 zu 9 beträgt.

7. Verwendung der wässrigen Suspension nach den Ansprüchen 1 - 6 zur Herstellung pulverförmiger Wasch- und Reinigungsmittel.